# EUROPEAN PATENT SPECIFICATION

(11) **EP 1 224 827 B1**
(45) Date of publication and mention of the grant of the patent: **21.03.2007**
(21) Application number: 00969608.9
(22) Date of filing: 18.10.2000
(51) Int. Cl.: H04Q 7/38, H04L 9/32

(54) **AUTHENTICATION OF SUBSCRIBER STATION**
AUTHENTIFIZIERUNG EINER TEILNEHMERSTATION
AUTHENTIFICATION D'UNE STATION D'ABONNE

(30) Priority: 19.10.1999 FI 992258; 02.12.1999 FI 992595
(43) Date of publication of application: 24.07.2002
(73) Proprietor: Setec Oy, 01740 Vantaa (FI)
(72) Inventor: PAATERO, Lauri, FIN-00970 Helsinki (FI); RANTALA, Janne, FIN-02260 Espoo (FI)
(74) Representative: Holmström, Stefan Mikael
(86) International application number: PCT/FI2000/000907
(87) International publication number: WO 2001/030104

(56) References cited:
- EP-A1- 0 750 086
- WO-A1-00/52949
- WO-A2-98/49855
- GB-A- 2 279 540
- GB-A- 2 319 150

## Description

The present invention relates to authenticating a subscriber station, wherein the identity of the subscriber station is verified on the basis of a subscriber-station-specific secret key stored in the subscriber station. The invention particularly relates to a solution for identifying an authentication message generated by an external attacker, and for guaranteeing that no such information on processing such authentication message reaches the external attacker that would enable the attacker to crack the secret key.

The invention primarily relates to authenticating a subscriber station in a GSM (Global System for Mobile Communications) system. It is to be noted, however, that the invention may also be applied in other connections although in the following the invention will be described mainly referring to the GSM system.

In the GSM system, authentication of a subscriber station is based on a request-response procedure. For the authentication, a subscriber-station-specific secret key Ki and authentication algorithm A3 have been stored on the SIM (Subscriber Identity Module) card of the subscriber station. The subscriber-station-specific secret key Ki of the subscriber station and the corresponding authentication algorithm A3 have also been stored in an authentication centre of a GSM network. In order to carry out the authentication, a random number generator arranged in the authentication centre first generates a random number and transmits it to a counter as an input. Next, the counter computes a response SRES on the basis of the random number, authentication algorithm A3 and secret key Ki. The authentication centre then transmits the random number and the response SRES to a network element which carries out the actual authentication, which, as regards the GSM system, is a VLR (Visitor Location Register).

The visitor location register forwards the received random number to the subscriber station to be authenticated. The subscriber station comprises a counter, which computes a response SRES on the basis of the received random number, secret key Ki of the subscriber station and authentication algorithm A3, and the subscriber station transmits the response SRES to the VLR. The VLR then compares the response transmitted by the authentication centre with the response transmitted by the subscriber station. Since the secret key Ki stored in the memory of the subscriber station is subscriber-station-specific, there is only one subscriber station capable of generating a correct response to the input transmitted thereto. If the responses of the subscriber station and the authentication centre are identical, the subscriber station has thus been authenticated.

A drawback of the known authentication procedure described above is that it is possible for an external attacker who desires to crack the secret key stored in the subscriber station to try to crack the secret key by supplying different inputs to the subscriber station (or the SIM card thereof) again and again and monitoring the responses being transmitted from the subscriber station. When this procedure is repeated frequently enough and statistics is collected about the inputs and responses, the secret key Ki may be revealed on the basis of the collected data. If the external attacker cracks the key, he or she is capable of cloning the subscriber station (or the SIM card) by producing a second subscriber station which has an identical secret key, in which case the cloned subscriber station can be used for making calls, for which the owner of the original subscriber station is billed.

Previously there is known from WO 98/49855 A an authentication method, where a two-way authentication procedure is carried out. The two-way procedure makes it possible for both the subscriber station and the network to ensure that the other party is reliable. A significant drawback involved with this solution is, however, that the solution requires extra signaling between the mobile station and the network, as compared to prior art solutions which are used in the GSM system, for instance. Existing SIM cards in the GSM system, for instance, are not capable of handling signaling where the mobile station transmits a random number to the network, as taught by WO 98/49855. The introduction of such a solution into existing mobile communication systems would therefore require that all existing mobile stations / SIM cards are changed in order to be capable of handling the new signaling.

Previously there is also known from WO 00/52949 A solution for improving the security of bilateral authentication methods. This publication, which has been published after the priority date of the present application, discloses for a person skilled in the art a bilateral authentication procedure, where a first party transmits to a second party a random number and a first part of a enciphered random number. The second party utilizes the received random number and a secret key to determine if the random number has been transmitted from an authentic party. A drawback with such a solution is that the second party needs to be able to handle an authentication message with one extra parameter, as compared to prior art solutions, where it is sufficient to handle authentication messages with only one input. The introduction of such a solution into existing mobile communication systems would therefore require that all existing mobile stations / SIM cards are changed in order to be capable of handling the new signaling.

Previously there is also known from GB 2 319 150 A a security method for making secure an authentication method that uses a secret key algorithm.

An object of the present invention is to alleviate the above-mentioned problem by providing a solution which solves the problems with prior art solutions by making it possible for new SIM cards and/or subscriber stations to determine whether or not an input in an authentication message is from a reliable source, at the same time as old SIM cards and/or subscriber stations also are capable of handling such an input, and owing to which it is more difficult for an external attacker to crack a secret key of a SIM card and/or subscriber station. The object is achieved by a method as defined in independent claim 1.

The invention further relates to a telecommunication system as defined in independent claim 6, and wherein a method of the invention can be utilized.

The invention further relates to an authentication centre in a telecommunication system, as defined in independent claim 11.

The invention still further relates to a subscriber station of a telecommunication system as defined in independent claim 12.

The invention still further relates to a SIM card as defined in independent claim 16.

The idea underlying the invention is that when, while authenticating a subscriber station, an input whose correctness can be checked by the subscriber station is used as the input instead of a random number, a solution for making it even more difficult to crack a subscriber-station-specific secret key is achieved. The subscriber station can then identify an incorrect input, i.e. an input which in all probability originates from an external attacker trying to crack the secret key of the subscriber station. According to the invention, the subscriber station can be programmed to operate such that cracking the secret key is made significantly more difficult when the subscriber station has identified an input originating from an external attacker.

The most important advantages of the solution of the invention thus are that it is even more difficult for the external attacker to crack the secret key used in authenticating a particular subscriber station, and that the invention can with extremely slight changes be applied to existing systems. In the GSM system, for example, the invention can be directly implemented in the authentication centre of the system, which means that new telephones can right from the start be equipped with SIM cards capable of checking the input according to the invention. It is not necessary to change the SIM cards in old telephones since the old SIM cards are capable of processing the input produced by an authentication centre operating according to the invention. The old telephones simply assume that the input is a random number to be processed as before in connection with authentication.

In a first preferred embodiment of the invention, the subscriber station produces and forwards an input only if the subscriber station has checked and concluded that the input is correct. Consequently, it is more difficult to crack the secret key since an external attacker does not know how to choose the input so that the checking carried out by the subscriber station would indicate that the input is correct. The authentication centre of the telecommunication system, for example, comprises information on the checking procedures used by the subscriber station, which means that the authentication centre is capable of producing an input to be transmitted to the subscriber station which is correct on the basis of the checking carried out by the subscriber station.

In a second preferred embodiment of the invention, the subscriber station computes and forwards a random response if it detects that the received input is incorrect. The random response may be computed by another algorithm than the authentication algorithm. Alternatively, the random response may be computed by the authentication algorithm but, instead of the secret key of the subscriber station, the computation utilizes another key which is a "pseudo key", or, alternatively, the random response may comprise a random number generated by a random number generator. The point is that the random response resembles a real response such that an external attacker does not, on the basis of the length of the response, for example, know that the random response is not a real response equipped with an authentication algorithm and a secret key.

In a third preferred embodiment of the invention, the subscriber station maintains a counter function to Compute the number of inputs that are incorrect on the basis of a message authentication code. In such a case, when a predetermined limit value is exceeded, the subscriber station locks such that it no longer provides a correct response to the input. In this embodiment, the subscriber station can thus produce and forward a response which is either correct or incorrect regardless of whether the input is correct until the counter function indicates that the maximum number of incorrect inputs is exceeded, whereby the authentication function of the subscriber station locks. The locking may take place either such that the subscriber station no longer provides responses at all or, alternatively, in order to mislead, the subscriber station may continue by producing incorrect responses only, such as random responses. This prevents the external attacker from having the possibility to crack the secret key of the subscriber station by utilizing statistics, for example.

The counter function of the subscriber station may be implemented, for example, such that when being set up, the counter function has been set to a certain initial value, and it has also been made sure that the counter function cannot be manipulated later (in order to reset the counter function to the initial value, for instance). Next, when the counter function of the subscriber station reaches a predetermined limit value which, depending on the application, may range from 100 to 10 000, its authentication functions will be permanently locked such that the subscriber station no longer provides correct responses. When the subscriber station is one in which the authentication functions are arranged on the SIM card, such as in a GSM mobile station, the subscriber station must next be provided with a new SIM card to replace the locked one.

Preferred embodiments of the method, system, subscriber station and SIM card of the invention are disclosed in the attached dependent claims 2 to 5, 7 to 10, 13 to 15, 17 and 18.

In the following, the invention will be described in closer detail with reference to the accompanying drawings, in which
Figure 1 is a flow diagram showing a first preferred embodiment of a method of the invention,
Figure 2 is a block diagram showing a first preferred embodiment of a system of the invention,
Figure 3 illustrates an input utilized in authenticating a subscriber station,
Figure 4 is a flow diagram showing the first preferred embodiment of the method of the invention,
Figure 5 is a block diagram showing a third preferred embodiment of the system of the invention, and
Figure 6 is a flow diagram showing a second preferred embodiment of the method of the invention.

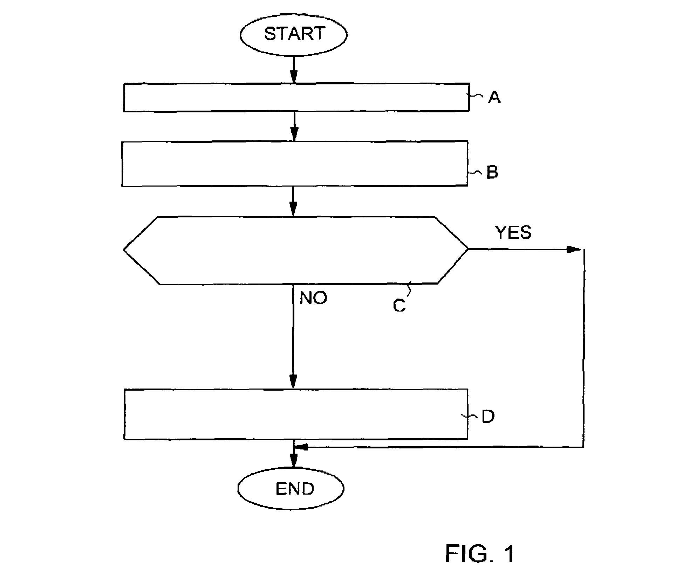

Figure 1 is a flow diagram showing a first preferred embodiment of a method of the invention. The flow diagram of Figure 1 can be utilized, for example, in processing an authentication message received by a GSM subscriber station/SIM card.

In block A in Figure 1, an authentication message comprising an input RAND is received.

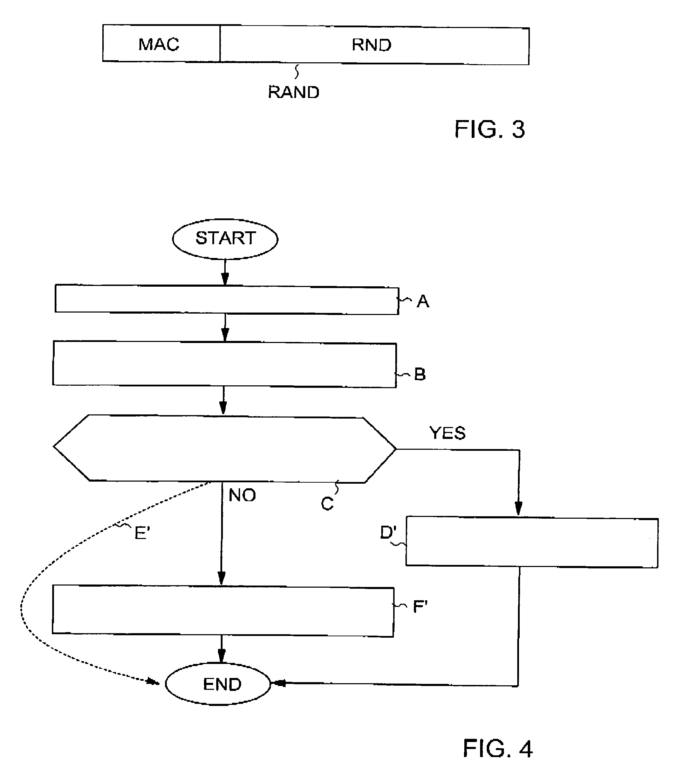

In block B, a message authentication code is computed according to the input RAND and a predetermined checking algorithm. The checking algorithm used should be selected such that it can be concluded whether or not the input is correct on the basis of the result of the computation. Such a checking can be carried out, for example, by predetermining that the input RAND always consists of two parts (as shown by Figure 3), thus comprising a random number RND and message authentication code MAC computed by the predetermined checking algorithm. Hence, in block B, the part RND used for computing the message authentication code can be retrieved from the input RAND.

After computing the message authentication code, it is checked in block C whether the part MAC remaining of the input corresponds to the computed message authentication code. If the input is incorrect on the basis of the computed message authentication code, it can be concluded that the input originates from an external attacker.

The flow diagram of Figure 1 thus enables an input originating from an external attacker to be identified, which means that the authentication process may from now onwards proceed such that the external attacker will not be provided with a sufficient amount of information for him or her to crack the secret key.

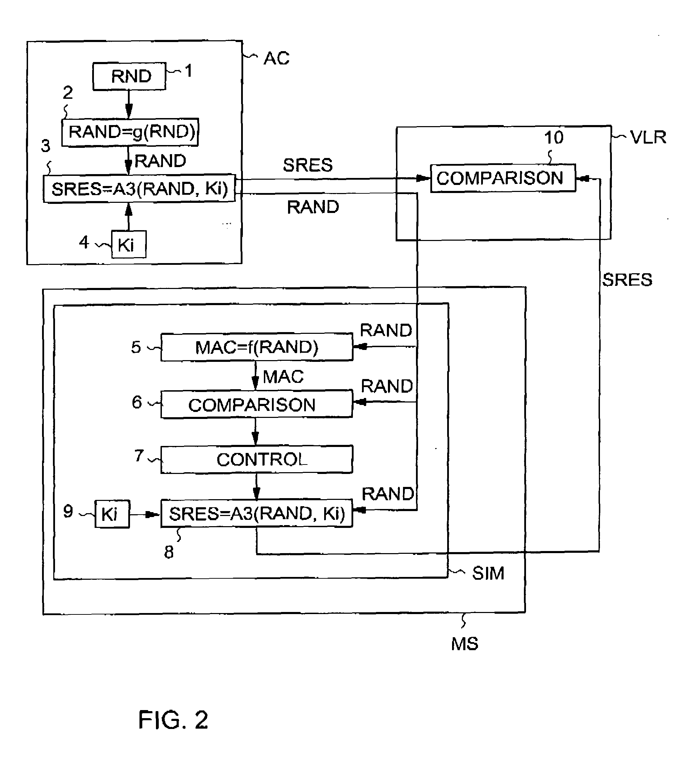

Figure 2 is a block diagram showing a first preferred embodiment of a system of the invention. The system of Figure 2 may be a GSM system, for example.

In the case of Figure 2, a majority of the authentication equipment of the system is arranged in a special authentication centre AC which, in connection with the GSM system, may be located in connection with an HLR (Home Location Register), for example. In the GSM system, the subscriber station is authenticated by a VLR such that the VLR receives from the authentication centre AC an input RAND and response SRES enabling the VLR to authenticate the subscriber station MS.

The authentication centre AC of Figure 2 comprises a random number generator 1 for generating a random number RND to a counter 2. The counter 2 computes an MAC (Message Authentication Code) on the basis of the random number RND and a first predetermined algorithm g. Next, the counter 2 forms an input RAND from the random number RND and the message authentication code MAC. In the exemplary case of Figure 2, the input RAND thus consists of two parts. The input is illustrated in Figure 3.

The authentication centre AC comprises a memory 4 with the secret key stored therein of all those subscriber stations in the authentication of which the authentication centre participates. In practice, the authentication centre can be operator-specific, in which case all secret keys of the subscriber stations of the operator have been stored in the memory of the authentication centre. In the case of Figure 2, the secret key Ki of the subscriber station MS consisting of a mobile station has been stored in the memory. The authentication centre supplies the secret key Ki retrieved from the memory 4 and the input RAND produced by the counter 2 to a counter 3.

The counter 3 computes a response SRES on the basis of the secret key Ki, input RAND and authentication algorithm A3. The authentication centre transmits the input RAND and response SRES to the VLR.

In order to authenticate the subscriber station MS, the VLR transmits the input RAND received from the authentication centre to the subscriber station MS. The VLR stores the response received from the authentication centre in the memory such that it is available for a comparing element 10.

The input RAND received by the subscriber station MS is conveyed to a counter 5 located on the SIM card of the subscriber station MS. The counter 5 then computes a message authentication code by utilizing the predetermined part of the input and a checking algorithm f. In the embodiment of Figure 2, it is assumed that the structure of the input RAND produced by the authentication centre AC is similar to that in Figure 2, i.e. the input consists of the random number RND generated by the random number generator 1 and the message authentication code MAC computed by the algorithm g(RND). The subscriber station checking algorithm f then retrieves the first part RND of the input RAND and next computes a message authentication code MAC in a similar manner to that used by the counter 2 of the authentication centre, i.e. by the algorithm g(RND). The counter 5 supplies the computed message authentication code MAC to a comparing unit 6. Next, the comparing unit compares the message authentication code MAC computed by the counter 5 with the message authentication code MAC in the input RAND. If the comparing unit 6 detects that the message authentication code computed by the counter corresponds to the part MAC remaining of the input, the comparing means 6 indicates to a control unit 7 that the input RAND is correct.

If the control unit 7 detects that the input is correct, it activates a counter 8 to compute a response to the input RAND. The counter 8 computes the response SRES on the basis of the input RAND, subscriber-station-specific secret key Ki stored in a memory 9 and authentication algorithm A3. The algorithm is thus the same algorithm A3 and the parameters are thus the same parameters as the counter 3 of the authentication centre used. The subscriber station MS thus produces the response SRES transmitted to the VLR which corresponds to the response SRES transmitted by the authentication centre. When, after the comparison, the comparing unit 10 of the VLR detects that the responses are identical, it concludes that the subscriber station MS has been authenticated.

If, on the other hand, the comparing unit 6 indicates to the control unit 7 that the input RAND is incorrect, the input has most likely been supplied by an external attacker. In such a case, the control unit interrupts the process for authenticating the subscriber station such that no response will be transmitted by the subscriber station. Alternatively, the control unit 7 can then activate a random response to be forwarded. The random response herein refers to any response which resembles a correct one. Such a random response may, for example, comprise a random number or a response computed by an algorithm. The point is that the response is not computed by the authentication algorithm A3, secret key Ki and input RAND. If this was the case, the external attacker would be provided with the real response to the supplied input, which might assist in cracking the secret key. If, on the other hand, the external attacker is provided with a random response resembling (i.e. the length of the response equals the length of the real response, etc.) the real response, the external attacker will never know that the response is an incorrect one.

The system of Figure 2 is preferable in that the authentication centre of the invention shown therein can also be used in connection with existing, in other words old, subscriber stations. This is also feasible when the input RAND is selected such that its length corresponds with the input supplied to the old subscriber stations. Naturally, the old subscriber stations are incapable of checking whether or not the response SRES is correct but they are, however, capable of computing the response SRES from the input comprising the message authentication code.

The blocks shown in the block diagram of Figure 2 may comprise electronic circuits or, alternatively, one or more blocks may be implemented by software. Hence, no two separate counters, for example, are necessary at the subscriber station or the authentication centre, for example, but the counters can be implemented, for example, by one processor and computer program in a manner known per se.

Although it has been described in connection with Figure 2 that the SIM card of the subscriber station comprises the necessary parts for producing a response in connection with authentication, it is, of course, possible that these parts are, instead of the SIM card, arranged in the subscriber station. Such a solution is relevant particularly in a system comprising no SIM cards at all.

Figure 3 illustrates an input utilized in authenticating a subscriber station. In the system of Figure 2, for example, the counter 2 can produce such an input by utilizing a random number RND and algorithm g. Applied to the GSM system, the total length of the input RAND is 16 bytes. According to the invention, the length of the random number RND can then be 8 to 14 bytes, for example. The length of the message authentication code MAC computed on the basis of the random number and algorithm g can correspondingly be 2 to 8 bytes.

When the subscriber station of the invention receives the input of Figure 3, it computes a message authentication code by utilizing the checking algorithm and the predetermined part of the input, i.e. the random number RND of the input. If the message authentication code computed by the subscriber station corresponds to the part remaining of the input, i.e. the message authentication code MAC, the subscriber station concludes that the input is correct.

Figure 4 is a flow diagram showing a second preferred embodiment of the method of the invention. The flow diagram of Figure 4 can be utilized in processing an authentication message in the subscriber station of Figure 2, for example.

Blocks A to C in Figure 4 are similar to blocks A to C in Figure 1, i.e. in those blocks, it is checked whether or not the received input is correct on the basis of the computed message authentication code.

If, in block C, it is found out that the input is correct on the basis of the computed message authentication code, a response SRES is computed and forwarded in block D'. The response is computed on the basis of the predetermined authentication algorithm A3, secret key Ki and input RAND.

If, on the other hand, it is detected in block C that the input RAND is incorrect on the basis of the message authentication code, the input RAND most likely originates from an external attacker who tries to crack the secret key used in the authentication. According to the invention, two alternate ways exist as to how to proceed.

The first alternative is designated by arrow E', wherein the processing of the authentication message is interrupted. No response will then be transmitted to the authentication message. Consequently, the external attacker receives no response to the input, which means that the attacker is unable to collect any statistics about the inputs and responses or use such statistics for cracking the secret key.

The second alternative is shown in block F', wherein a random response is produced to the input RAND and forwarded. The random response can be any response which resembles a real response and which has not been computed in a similar manner to the real response (cf. block D'). Consequently, the random response can be directly produced by the random number generator, or it can be computed from the input by utilizing a suitable algorithm and input. The external attacker will thus receive an incorrect response, the attacker not knowing this, however.

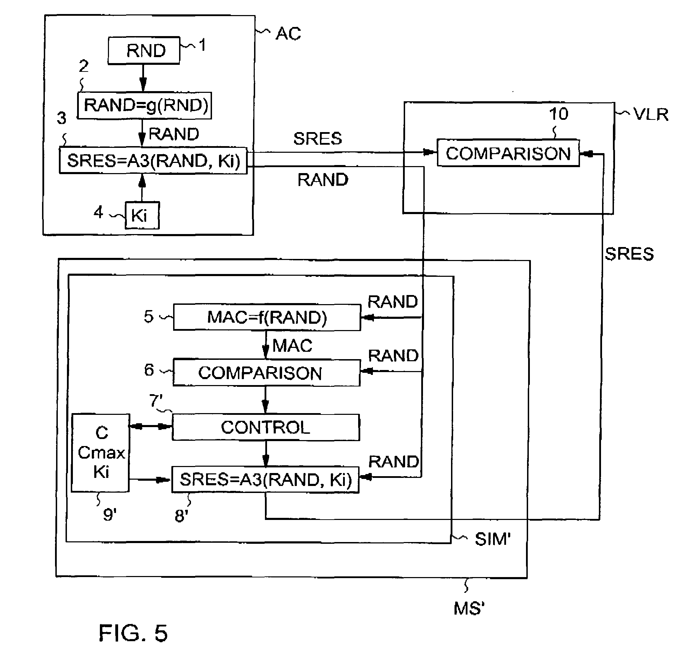

Figure 5 is a block diagram showing a second preferred embodiment of the system of the invention. In the embodiment of Figure 5, the authentication centre AC and the visitor location register VLR are similar to the authentication centre and visitor location register VLR shown in the embodiment of Figure 2. A similar input to that described in connection with the embodiment of Figure 2 is thus transmitted to a subscriber station MS'.

An SIM card SIM' located in the subscriber station MS' of Figure 5 is also highly similar to the SIM card described in connection with Figure 2. The embodiment of Figure 5 differs from the case of Figure 2 in that the SIM' card of the subscriber station maintains a counter function concerning the number of incorrect inputs.

The input RAND received by the subscriber station MS' is conveyed to the counter 5 in the SIM card thereof. The counter 5 then computes a message authentication code by utilizing the predetermined part of the input and checking algorithm f. In the embodiment of Figure 5, it is assumed that the structure of the input RAND produced by the authentication centre AC is similar to that of Figure 3, i.e. the input consists of the random number RND generated by the random number generator 1 and message authentication code MAC computed by the algorithm g(RND). The subscriber station checking algorithm f then retrieves the first part RND of the input RAND, and then computes a message authentication code MAC in a similar manner to that used by the counter 2 of the authentication centre, i.e. by the algorithm g(RND). The counter 5 supplies the computed message authentication code MAC to the comparing unit 6. Next, the comparing unit compares the message authentication code MAC computed by the counter 5 with the message authentication code MAC in the input RAND. If the comparing unit 6 detects that the message authentication code computed by the counter corresponds to the part MAC remaining of the input, the comparing means 6 indicates to a control unit 7' that the input RAND is correct.

If the control unit 7' detects that the input is correct, it activates a counter 8' to compute a response to the input RAND. The counter 8' computes the response SRES on the basis of the input RAND, subscriber-station-specific secret key Ki stored in a memory 9' and authentication algorithm A3. The algorithm is thus the same algorithm A3 and the parameters are thus the same parameters as the counter 3 of the authentication centre used. Consequently, the subscriber station MS produces the response SRES transmitted to the VLR which corresponds to the response SRES transmitted by the authentication centre. When, after the comparison, the comparing unit 10 of the VLR detects that the responses are identical, it concludes that the subscriber station MS has been authenticated.

If, on the other hand, the comparing unit 6 indicates to the control unit 7' that the input RAND is incorrect, the response is most likely supplied by an external attacker. The control unit 7' then updates the counter function of the subscriber station for keeping a record of the number of received incorrect inputs. In the exemplary case of Figure 5, this may be carried out by means of variable C stored in the memory 9' and a limit value Cmax. When the SIM card SIM' was first put to use, variable C was given an initial value of zero stored in the memory 9'. Similarly, the variable Cmax was given e.g. a value of 1000 stored in the memory 9'. When the comparing unit 6 indicates that the received input is incorrect, the control unit 7' increases the value of variable C by one, and it further compares the new value of variable C with the maximum value Cmax. If the maximum value has been reached, the control unit locks the operation of the SIM card such that the SIM card no longer produces correct responses to the received inputs RAND. In practice, this may be carried out such that the SIM card no longer produces responses at all, or the SIM card will continue by producing random responses only, or the SIM card will only produce an announcement indicating that it is locked.

If the control unit 7' has been informed of an incorrect response by the comparing unit, and if variable C has not reached the maximum value Cmax in connection with the counter function update, the control unit may operate in many alternate ways, depending on the case. An alternative is that the control unit interrupts the process of authenticating the subscriber station such that the subscriber station will no longer transmit responses. Alternatively, the control unit 7' may in a similar case activate a random response to be forwarded. The random response herein refers to any response which resembles a real response. Such a random response may, for example, comprise a random number and a response computed by an algorithm. The point is that the response is not computed by the authentication algorithm A3, secret key Ki and input RAND. If this was the case, the external attacker would be provided with the real response to the supplied input, which might assist in cracking the secret key. If, on the other hand, the external attacker is provided with a random response resembling (i.e. the length of the response equals the length of the real response, etc.) the real response, the external attacker will never know that the response is an incorrect one.

The blocks shown in the block diagram of Figure 5 may consist of electronic circuits, or, alternatively, one or more blocks may be implemented by software. Hence, no two separate counters, for example, are necessary at the subscriber station or the authentication centre, for example, but the counters can be implemented by one processor and computer program in a manner known per se.

Although it has been described in connection with Figure 5 that the SIM card of the subscriber station comprises the necessary parts for producing a response in connection with authentication, it is, of course, possible that these parts are, instead of the SIM card, arranged in the subscriber station. Such a solution is relevant particularly in a system comprising no SIM cards at all.

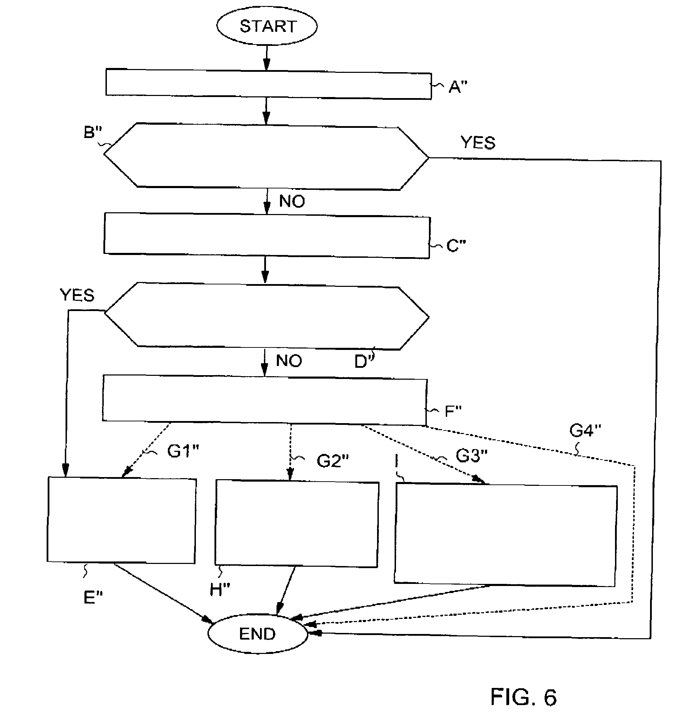

Figure 6 is a flow diagram showing a third preferred embodiment of the method of the invention. The flow diagram of Figure 6 may be utilized, for example, in the subscriber station of Figure 5 for processing an authentication message. A predetermined variable Cmax indicating the highest allowed number of incorrect inputs has then been stored in the subscriber station (or the SIM card thereof) when they were being set up. In addition, variable C to keep a record of received incorrect responses is set to a predetermined initial value.

In block A" of Figure 6, an authentication message comprising the input RAND is received.

In block B", it is checked whether or not variable C utilized by the counter function has received the limit value Cmax. If so, this means that the highest allowed number of received incorrect inputs Cmax has already been reached, which means that the authentication process is interrupted. Otherwise, the process proceeds to block C".

In block C", a message authentication code is computed according to the input RAND and a predetermined checking algorithm. The checking algorithm used should be selected such that it can be concluded whether or not the input is correct on the basis of the result of the computation. Such a checking can be carried out, for example, by predetermining that the input RAND always consists of two parts (as shown in Figure 3), thus comprising a random number RND and a message authentication code MAC computed by the predetermined checking algorithm. In block C", the part RND used for computing the message authentication code can then be retrieved from the input RAND. After computing the message authentication code, it is checked in block D" whether or not the part MAC remaining of the input corresponds to the computed message authentication code.

If it is concluded in block D" that the input is correct on the basis of the computed message authentication code, a response SRES is computed and forwarded in block E". The response is computed on the basis of the predetermined authentication algorithm A3, secret key Ki and input RAND.

If, on the other hand, it is detected in block D" that the input RAND is incorrect on the basis of the message authentication code, the input RAND most likely originates from an external attacker trying to crack the secret key used in the authentication. The process then proceeds to block F".

In block F", the value of variable C used in the counter function is updated by, for example, increasing or decreasing the value thereof by one (depending on how the initial value of C and Cmax were determined when the counter function was being set up). When the value of variable C has been changed, four alternate ways exist as to how to proceed according to the invention.

The first alternative is designated by arrow G1", wherein the response is computed and forwarded as usual. An external attacker is then provided with the correct response to the input used by the attacker. The possibility of cracking the secret key by utilizing statistics has, however, been restricted since the counter function can be used for determining that the device to be authenticated only produces e.g. 1000 responses before being locked and stopping the production of correct responses.

The second alternative is designated by arrow G2", wherein a random response is produced and transmitted in block H". The random response may be a response generated by the random number generator, or alternatively, a response computed by another key than the secret key used for authentication. The point is that the external attacker is unable to conclude whether or not the response is correct on the basis of the response.

The third alternative is designated by arrow G3", i.e. an announcement is produced and transmitted in block I" to indicate that the input is incorrect.

The fourth alternative is designated by G4", wherein the processing of the authentication message is interrupted. No response is then transmitted to the authentication message. The external attacker will thus receive no response to the input, which means that the attacker is unable to collect any statistics on the inputs and responses or utilize such statistics for cracking the secret key.

The flow diagram in Figure 6 shows that the comparison of variable C with the limit value Cmax is carried out immediately after receiving the input in block B". Naturally, this is only one example of how the comparison can be implemented. Many different alternatives thus exist, an alternative being, for example, that the comparison between variable C used by the counter function and the limit value Cmax is carried out only after the received response has been found incorrect and the value of the counter function has been updated.

It is to be understood that the above description and the related drawings are only intended to illustrate the present invention. It is obvious to one skilled in the art that the invention can be modified in various ways without deviating from the scope of the invention disclosed in the attached claims.

### TEXT FOR FIGURES

**Figure 1**

| **Box** | **Text** |
|---|---|
| A | Receiving input |
| B | Computing message authentication code |
| C | Is input correct on basis of computed message authentication code? |
| D | Received input is generated by external attacker |

**Figure 4**

| **Box** | **Text** |
|---|---|
| A | Receiving input |
| B | Computing message authentication code |
| C | Is input correct on basis of computed message authentication code |
| D' | Computing and transmitting response |
| F' | Producing and transmitting random response |

**Figure 6**

| **Box** | **Text** |
|---|---|
| A" | Receiving input |
| B" | Has C reached limit value Cmax? |
| C" | Computing message authentication code |
| D" | Is input correct on basis of computed message authentication code |
| E" | Computing and transmitting response |
| F" | Updating value of C |
| H" | Producing and transmitting random response |
| I | Producing and transmitting announcement indicating that input was incorrect |

## Claims

1. A method for identifying an authentication message generated by an external attacker in a telecommunication system comprising:
at least one subscriber station (MS, MS') comprising a counter (8, 8') and a memory (9, 9') with a subscriber-station-specific secret key (Ki) stored therein, and
authentication means (1, 3, 4, VLR) for authenticating said subscriber station, the authentication means comprising a random number generator (1), a counter (3) and a memory (4) with the subscriber-station-specific secret key (Ki) of said at least one subscriber station (MS, MS') stored therein, said authentication means being arranged to transmit to the at least one subscriber station an input (RAND) including a random number (RND), generated by utilizing said random number generator, and a message authentication code (MAC), calculated with said random number and a first algorithm (9) and to compute a response (SRES) on the basis of said input (RAND), an authentication algorithm (A3) and the subscriber-station-specific secret key (Ki), and
wherein the authentication of a subscriber station (MS, MS') is carried out by comparing a response (SRES) received from the subscriber station in response to the input (RAND) with the response (SRES) computed by the authentication means, the method comprising:
receiving with said at least one subscriber station (MS, MS') an authenticating message comprising said input (RAND),
checking the correctness of the input by computing in said at least one subscriber station (MS, MS') a message authentication code by utilizing a predetermined part including said random number (RND) of the input (RAND) and a checking algorithm (f), and
identifying the input as being incorrect and the authentication message as being generated by the external attacker if the computed message authentication code does not correspond to a remaining part including said message authentication code (MAC) of the input (RAND), and
computing a response (SRES) on the basis of said authentication algorithm (A3), the input (RAND) and said secret key (Ki) stored in the memory (9,9') of the subscriber station (MS,MS') and forwarding said response (SRES) from the at least one subscriber station (MS, MS') if the computed message authentication code does correspond to said remaining part including said message authentication code (MAC) of the input (RAND).

2. A method as claimed in claim 1, comprising:maintaining a counter function to keep a record of the number of inputs (RAND) that are incorrect, and
locking the authentication function of the device to be authenticated such that the device to be authenticated no longer produces correct responses (SRES) to the inputs (RAND) in the authentication messages if the counter function indicates that the number of incorrect inputs has reached a predetermined limit value.

3. A method as claimed in any one of claims 1 to 2, comprising producing and forwarding a random response if the input (RAND) is incorrect.

4. A method as claimed in claim 3, wherein said random response is a random number.

5. A method as claimed in claim 3, wherein said random response is computed by utilizing the input (RAND) and a predetermined algorithm.

6. A telecommunication system comprising:
authentication means (1, 3, 4, VLR) for authenticating a subscriber station, the authentication means comprising a random number generator (1), a counter (3) and a memory (4) with a subscriber-station-specific secret key (Ki) of said subscriber station (MS, MS') stored therein, the authentication means being arranged to:
- compute an input (RAND), by calculating a message authentication code with a random number (RND) from the random number generator (1) and a first algorithm (g), and by including said random number and said message authentication code in said input (RAND),
- compute a response (SRES) on the basis of said input (RAND), an authentication algorithm (A3) and the subscriber-station-specific secret key (Ki) stored in the memory (4) of the authentication means,
- transmit said input (RAND) to said subscriber station (MS), and
- indicate that the subscriber station (MS, MS') has been authenticated in response to the authentication means (VLR) receiving from the subscriber station (MS, MS') a response (SRES) which corresponds to a response (SRES) computed by the authentication means, and
at least one subscriber station (MS, MS') comprising a counter (8, 8') and a memory (9, 9') with a subscriber-station-specific (MS, MS') secret key (Ki) stored therein, wherein the subscriber station (MS, MS') is arranged to:
- utilize a predetermined part including said random number (RND) of the input (RAND) and a checking algorithm (f) to compute a message authentication code (MAC) and to check the correctness of a received input (RAND),
- identify that the input (RAND) is incorrect in response to the computed message authentication code (MAC) not corresponding to a remaining part including said message authentication code (MAC) of the input (RAND), and
- compute a response to be transmitted to the authentication means (VLR) by the subscriber station (MS, MS') on the basis of said authentication algorithm (A3), said secret key (Ki) stored in the memory (9, 9') of the subscriber station (MS, MS') and the input (RAND) in response to the computed message authentication code (MAC) corresponding to said remaining part including said message authentication code (MAC) of the input (RAND).

7. A system as claimed in claim 6, wherein the subscriber station (MS') is arranged to:
- maintain a counter function (7', 9') to keep a record of the number (C) of inputs (RAND) that are incorrect, and
- lock, such that the subscriber station is no longer arranged to produce correct responses to the received inputs, as a response to an indication by the counter function (7', 9') that the number (C) of incorrect inputs corresponds to a predetermined limit value (Cmax).

8. A system as claimed in claim 6 or 7, wherein the subscriber station (MS, MS') is arranged to compute a random response to be transmitted to the authentication means (VLR) by the subscriber station (MS, MS') in response to an incorrect input.

9. A system as claimed in claim 6 or 7, wherein the subscriber station (MS, MS') is arranged to transmit no response to the authentication means in response to an incorrect input (RAND).

10. A system as claimed in any one of claims 6 to 9, wherein said system is a mobile communication system, preferably a GSM system.

11. An authentication centre (AC) of a telecommunication system, said telecommunication system comprising at least one subscriber station (MS, MS') comprising a counter (8, 8') and a memory (9, 9') with a subscriber-station-specific secret key (Ki) stored therein, and wherein the authentication of a subscriber station (MS, MS') is carried out by transmitting an input (RAND) to said subscriber station and by comparing a response (SRES) received from the subscriber station in response to the input (RAND) with a response (SRES) calculated by the authentication centre (AC), wherein the authentication centre comprises:
a random number generator (1),
a counter (3), and
a memory (4) with subscriber-station-specific secret keys of subscriber stations stored therein,
said authentication center is arranged to:
- produce an input (RAND), by calculating a message authentication code with a random number (RND) from the random number generator (1) and a first algorithm (g), and by including said random number and said message authentication code in said input (RAND), and
- compute a response (SRES) on the basis of a secret key (Ki) retrieved from the memory (4), said input (RAND) and an authentication algorithm (A3), and
- transmit the input (RAND) and the response (SRES) to a network element carrying out authentication of the subscriber station (MS, MS').

12. A subscriber station (MS, MS') of a telecommunication system, said telecommunication system comprising authentication means (1, 3, 4, VLR) for authenticating said subscriber station, the authentication means comprising a random number generator (1), a counter (3) and a memory (4) with a subscriber-station-specific secret key (Ki) of said at least one subscriber station (MS, MS') stored therein, said authentication means being arranged to transmit to the subscriber station an input (RAND) including a random number (RND), generated by utilizing said random number generator, and a message authentication code (MAC), calculated with said random number and a first algorithm, and to compute a response (SRES) on the basis of said input (RAND), an authentication algorithm (A3) and the subscriber-station-specific secret key (Ki), and
wherein the authentication of a subscriber station (MS, MS') is carried out by comparing a response (SRES) received from the subscriber station in response to the input (RAND) with the response (SRES) computed by the authentication means, wherein the subscriber station comprises:
a memory (9, 9') with a secret key (Ki) stored therein,
means for receiving an input (RAND), and
a counter (5, 8, 8'), and
the subscriber station is arranged to utilize a predetermined part including said random number (RND) of the input (RAND) and a checking algorithm (f) to compute a message authentication code (MAC) and to check the correctness of an input, and to identify that the input (RAND) is incorrect in response to the computed message authentication code (MAC) not corresponding to a remaining part including said message authentication code (MAC) of the input (RAND), and
the counter (8, 8') is arranged to compute a response (SRES) based on said authentication algorithm (A3), said secret key (Ki) and said input (RAND) in response to the computed message authentication code (MAC) corresponding to a remaining part including said message authentication code (MAC) of the input.

13. A subscriber station as claimed in claim 12, wherein said subscriber station is arranged to:
- maintain a counter function (7', 9') to keep a record of the number (C) of inputs (RAND) that are incorrect, and
- lock such that the subscriber station is no longer arranged to produce correct responses to the received inputs in response to an indication by the counter function (7', 9') that the number (C) of incorrect inputs corresponds to a predetermined limit value (Cmax).

14. A subscriber station as claimed in any one of claims 11 to 13, wherein said subscriber station (MS. MS') is a subscriber station of a mobile communication system, preferably a GSM system, and that the memory (9, 9') and/or the counter (5, 8, 8') are arranged on an SIM card detachably attached to the subscriber station.

15. A subscriber station as claimed in any one of claims 11 to 14, wherein the counter (8, 8') is arranged to compute a random response which the subscriber station (MS, MS') is arranged to forward as a response to an incorrect input (RAND).

16. A SIM card (SIM) for a subscriber station of a telecommunication system, said telecommunication system comprising authentication means (1, 3, 4, VLR) for authenticating a subscriber station, the authentication means comprising a random number generator (1), a counter (3) and a memory (4) with a subscriber-station-specific secret key (Ki) of said at least one subscriber station (MS, MS') stored therein, said authentication means being arranged to transmit to the subscriber station an input (RAND) including a random number (RND), generated by utilizing said random number generator, and a message authentication code (MAC), calculated with said random number and a first algorithm, and to compute a response (SRES) on the basis of said input (RAND), an authentication algorithm (A3) and the subscriber-station-specific secret key (Ki), and
wherein the authentication of a subscriber station (MS, MS') is carried out by comparing a response (SRES) received from the subscriber station in response to the input (RAND) with the response (SRES) computed by the authentication means, wherein said SIM card comprises:
a counter (8, 8'), and
a memory (9, 9') with a secret key (Ki) stored therein, and
an inlet for receiving an input (RAND),
the SIM card is arranged to:
- utilize a predetermined part including said random number (RND) of the input (RAND) and a checking algorithm (f) to compute a message authentication code (MAC) and to check the correctness of the received input (RAND),
- identify that the input (RAND) is incorrect in response to the computed message authentication code (MAC) not corresponding to a remaining part including said message authentication code (MAC) of the input (RAND), and
- compute a response (SRES) on the basis of said authentication algorithm (A3), said secret key (Ki) and said input (RAND) in response to the computed message authentication code (MAC) corresponding to a remaining part including said message authentication code (MAC) of the input.

17. An SIM card as claimed in claim 16, wherein the SIM card is arranged to:
- maintain a counter function (7', 9') to keep a record of the number (C) of inputs (RAND) that are incorrect, and
- lock such that the SIM card is no longer arranged to produce correct responses to the received inputs in response to an indication by the counter function (7', 9') that the number (C) of incorrect inputs corresponds to a predetermined limit value (Cmax).

18. An SIM card as claimed in claim 16 or 17, wherein the counter (8, 8') is arranged to compute a random response in response to an incorrect input (RAND).

## Patentansprüche

1. Verfahren zur Erkennung einer Authentifikationsnachricht, die von einem externen Angreifer in einem Telekommunikationssystem generiert wird, wobei das System aufweist:
mindestens eine Teilnehmerstation (MS, MS'), die einen Zähler (8, 8') und einen Speicher (9, 9') mit einem darin gespeicherten teilnehmerstationsspezifischen geschützten Schlüssel (Ki) aufweist, und
Authentifikationsmittel (1, 3, 4, VLR) zur Authentifikation bzw. Echtheitsprüfung der Teilnehmerstation, wobei die Authentifikationsmittel aufweisen: einen Zufallszahlengenerator (1), einen Zähler (3) und einen Speicher (4) mit dem darin gespeicherten teilnehmerstationsspezifischen geschützten Schlüssel (Ki) der mindestens einen Teilnehmerstation (MS, MS'), wobei die Authentifikationsmittel so eingerichtet sind, daß sie ein Eingangssignal (RAND), das eine unter Verwendung des Zufallszahlengenerators generierte Zufallszahl (RND) enthält, und einen Nachrichtenberechtigungscode (MAC), der mit der Zufallszahl und einem ersten Algorithmus (g) berechnet wird, zu der mindestens einen Teilnehmerstation senden und eine Antwort (SRES)auf der Basis des Eingangssignals (RAND), eines Authentifikationsalgorithmus (A3) und des teilnehmerstationsspezifischen geschützten Schlüssels (Ki) berechnen, und
wobei die Authentifikation einer Teilnehmerstation (MS, MS') durchgeführt wird, indem eine Antwort (SRES), die von der Teilnehmerstation, als Reaktion auf das Eingangssignal (RAND) empfangen wird, mit der durch die Authentifikationsmittel berechneten Antwort (SRES) verglichen wird, wobei das Verfahren aufweist:
Empfang einer das Eingangssignal (RAND) enthaltenden Authentifikationsnachricht mit der mindestens einen Teilnehmerstation (MS, MS'),
Prüfen der Richtigkeit des Eingangssignals durch Berechnen eines Nachrichtenberechtigungscodes in der mindestens einen Teilnehmerstation (MS, MS') unter Verwendung eines vorgegebenen, die Zufallszahl enthaltenden Teils (RND) des Eingangssignals (RAND) und eines Prüfalgorithmus (f), und
Erkennen des Eingangssignals als falsch und der Authentifikationsnachricht als durch den externern Angreifer generiert, wenn der berechnete Nachrichtenberechtigungscode nicht dem übrigen, den Nachrichtenberechtigungscode enthaltenden Teil (MAC) des Eingangssignals (RAND) entspricht, und
Berechnen einer Antwort (SRES) auf der Basis des Authentifikationsalgorithmus (A3), des Eingangssignals (RAND) und des geschützten Schlüssels (Ki), der im Speicher (9, 9') der Teilnehmerstation (MS, MS') abgelegt ist, und Übermitteln der Antwort (SRES) von der mindestens einen Teilnehmerstation (MS, MS'), wenn der berechnete Nachrichtenberechtigungscode dem übrigen den Nachrichtenberechtigungscode enthaltenden Teil (MAC) des Eingangssignals (RAND) entspricht.

2. Verfahren nach Anspruch 1, das aufweist: Unterhalten einer Zählerfunktion, um ein Protokoll der Anzahl falscher Eingangsignale (RAND) zu führen, und
Blockieren der Authentifikationsfunktion des zu authentifizierenden Geräts, so daß das zu authentifizierende Gerät in den Authentifikationsnachrichten keine richtigen Antworten (SRES) auf die Eingangsignale (RAND) mehr erzeugt, wenn die Zählerfunktion anzeigt, daß die Anzahl falscher Eingangsignale einen vorgegebenen Grenzwert erreicht hat.

3. Verfahren nach einem der Ansprüche 1 bis 2, das die Erzeugung und Übermittlung einer zufälligen Antwort aufweist, wenn das Eingangssignal (RAND) falsch ist.

4. Verfahren nach Anspruch 3, wobei die zufällige Antwort eine Zufallszahl ist.

5. Verfahren nach Anspruch 3, wobei die zufällige Antwort unter Verwendung des Eingangssignals (RAND) und eines vorgegebenen Algorithmus berechnet wird.

6. Telekommunikationssystem, das aufweist:
Authentifikationsmittel (1, 3, 4, VLR) zur Authentifikation einer Teilnehmerstation, wobei die Authentifikationsmittel einen Zufallszahlengenerator (1), einen Zähler (3) und einen Speicher (4) mit einem darin gespeicherten teilnehmerstationsspezifischen geschützten Schlüssel (Ki) der Teilnehmerstation (MS, MS') aufweisen,
wobei die Authentifikationsmittel so eingerichtet sind, daß sie
- ein Eingangssignal (RAND) berechnen, indem ein Nachrichtenberechtigungscode mit einer Zufallszahl (RND) vom Zufallszahlengenerator (1) und einem ersten Algorithmus (g) berechnet wird und die Zufallszahl und der Nachrichtenberechtigungscode in das Eingangssignal (RAND) aufgenommen werden,
- eine Antwort (SRES) berechnen, die auf dem Eingangssignal (RAND), einem Authentifikationsalgorithmus (A3) und dem im Speicher (4) der Authentifikationsmittel abgelegten teilnehmerstationsspezifischen geschützten Schlüssel (Ki) basiert,
- das Eingangssignal (RAND) zur Teilnehmerstation (MS) senden und
- anzeigen, daß als Reaktion darauf, daß das Authentifikationsmittel (VLR) von der Teilnehmerstation (MS, MS') eine Antwort (SRES) empfängt, die einer durch die Authentifikationsmittel berechneten Antwort (SRES) entspricht, die Teilnehmerstation (MS, MS') authentifiziert worden ist, und
mindestens eine Teilnehmerstation (MS, MS'), die einen Zähler (8, 8') und einen Speicher (9, 9') mit einem darin abgelegten, für die Teilnehmerstation (MS, MS') spezifischen geschützten Schlüssel (Ki) aufweist, wobei die Teilnehmerstation (MS, MS') so eingerichtet ist, daß sie:
- einen vorgegebenen, die Zufallszahl enthaltenden Teil (RND) des Eingangssignals (RAND) und einen Prüfalgorithmus (f) nutzt, um einen Nachrichtenberechtigungscode (MAC) zu berechnen und die Richtigkeit eines empfangenen Eingangssignals (RAND) zu prüfen,
- als Reaktion auf einen berechneten Nachrichtenberechtigungscode (MAC), der einem den Nachrichtenberechtigungscode (MAC) enthaltenden restlichen Teil des Eingangssignals (RAND) nicht entspricht, das Eingangssignal (RAND) als falsch erkennt, und
- als Reaktion auf den berechneten Nachrichtenberechtigungscode (MAC), der dem restlichen Teil des Eingangssignals (RAND) entspricht, der den Nachrichtenberechtigungscode (MAC) enthält, auf der Basis des Authentifikationsalgorithmus (A3), des im Speicher (9, 9') der Teilnehmerstation (MS, MS') abgelegten geschützten Schlüssels (Ki) und des Eingangssignals (RAND) eine durch die Teilnehmerstation (MS, MS') zum Authentifikationsmittel (VLR) zu übermittelnde Antwort berechnet.

7. System nach Anspruch 6, wobei die Teilnehmerstation (MS') so eingerichtet ist, daß sie:
- eine Zählerfunktion (7', 9') unterhält, um ein Protokoll der Anzahl (C) falscher Eingangssignale (RAND) zu führen, und
als Reaktion auf eine Anzeige durch die Zählerfunktion (7', 9'), daß die Anzahl (C) falscher Eingangsignale einem vorgegebenen Grenzwert (Cmax) entspricht, zu blockieren, so daß die Teilnehmerstation nicht mehr für die Erzeugung richtiger Antworten auf die empfangenen Eingangsignale eingerichtet ist.

8. System nach Anspruch 6 oder 7, wobei die Teilnehmerstation (MS, MS') so eingerichtet ist, daß sie eine zufällige Antwort berechnet, die durch die Teilnehmerstation (MS, MS') als Reaktion auf ein falsches Eingangssignal zu dem Authentifikationsmittel (VLR) gesendet werden soll.

9. System nach Anspruch 6 oder 7, wobei die Teilnehmerstation (MS, MS') so eingerichtet ist, daß sie als Reaktion auf ein falsches Eingangssignal (RAND) keine Antwort zu dem Authentifikationsmittel sendet.

10. System nach einem der Ansprüche 6 bis 9, wobei das System ein mobiles Kommunikationssystem ist, vorzugsweise ein GSM-System.

11. Authentifikationszentrum (AC) eines Telekommunikationssystems, wobei das Telekommunikationssystem mindestens eine Teilnehmerstation (MS, MS') aufweist, die einen Zähler (8, 8') und einen Speicher (9, 9') mit einem darin gespeicherten teilnehmerstationsspezifischen geschützten Schlüssel (Ki) aufweist, und wobei die Authentifikation einer Teilnehmerstation (MS, MS') durchgeführt wird, indem ein Eingangssignal (RAND) zu der Teilnehmerstation gesendet wird und eine Antwort (SRES), die von der Teilnehmerstation als Reaktion auf das Eingangssignal (RAND) empfangen wird, mit einer durch das Authentifikationszentrum (AC) berechneten Antwort (SRES) verglichen wird, wobei das Authentifikationszentrum (AC) aufweist:
einen Zufallszahlengenerator (1),
einen Zähler (3), und
einen Speicher (4) mit darin abgelegten teilnehmerstationsspezifischen geschützten Schlüsseln von Teilnehmerstationen,
wobei das Authentifikationszentrum so eingerichtet ist, daß es:
- ein Eingangssignal (RAND) erzeugt, indem es mit einer Zufallszahl (RND) von dem Zufallszahlengenerator (1) und einem ersten Algorithmus (g) einen Nachrichtenberechtigungscode berechnet und die Zufallszahl und den Nachrichtenberechtigungscode in das Eingangssignal (RAND) aufnimmt, und
- auf der Basis eines aus dem Speicher (4) abgerufenen geschützten Schlüssels (Ki), des Eingangssignals (RAND) und eines Authentifikationsalgorithmus (A3) eine Antwort (SRES) berechnet, und
- das Eingangssignal (RAND) und die Antwort (SRES) zu einem Netzwerkelement sendet, das eine Authentifikation der Teilnehmerstation (MS, MS') durchführt.

12. Teilnehmerstation (MS, MS') eines Telekommunikationssystems, wobei das Telekommunikationssystem Authentifikationsmittel (1, 3, 4, VLR) zur Authentifikation der Teilnehmerstation aufweist, wobei die Authentifikationsmittel einen Zufallszahlengenerator (1), einen Zähler (3) und einen Speicher (4) mit einem darin gespeicherten teilnehmerstationsspezifischen geschützten Schlüssel (Ki) der mindestens einen Teilnehmerstation (MS, MS') aufweisen, wobei die Authentifikationsmittel so eingerichtet sind, daß sie ein Eingangssignal (RAND), das eine unter Verwendung des Zufallszahlengenerators generierte Zufallszahl (RND) enthält, und einen mit der Zufallszahl und einem ersten Algorithmus berechneten Nachrichtenberechtigungscode (MAC) zu der Teilnehmerstation senden und auf der Basis des Eingangssignals (RAND), eines Authentifikationsalgorithmus (A3) und des teilnehmerstationsspezifischen geschützten Schlüssels (Ki) eine Antwort (SRES) berechnen, und
wobei die Authentifikation einer Teilnehmerstation (MS, MS') durchgeführt wird, indem eine Antwort (SRES), die von der Teilnehmerstation als Reaktion auf das Eingangssignal (RAND) empfangen wird, mit der durch die Authentifikationsmittel berechneten Antwort (SRES) verglichen wird, wobei die Teilnehmerstation aufweist:
einen Speicher (9, 9') mit einem darin gespeicherten geschützten Schlüssel (Ki) ,
eine Einrichtung zum Empfang eines Eingangssignals (RAND) und
einen Zähler (5, 8, 8'), und
wobei die Teilnehmerstation so eingerichtet ist, daß sie einen vorgegebenen, die Zufallszahl enthaltenden Teil (RND) des Eingangssignals (RAND) und einen Prüfalgorithmus (f) nutzt, um einen Nachrichtenberechtigungscode (MAC) zu berechnen und die Richtigkeit eines Eingangssignals zu prüfen, und als Reaktion darauf, daß der berechnete Nachrichtenberechtigungscode (MAC) einem den Nachrichtenberechtigungscode (MAC) enthaltenden restlichen Teil des Eingangssignals (RAND) nicht entspricht, erkennt, daß das Eingangssignal (RAND) falsch ist, und
wobei der Zähler (8, 8') so eingerichtet ist, daß er als Reaktion darauf, daß der berechnete Nachrichtenberechtigungscode (MAC) einem den Nachrichtenberechtigungscode (MAC) enthaltenden restlichen Teil des Eingangssignals entspricht, auf der Basis des Authentifikationsalgorithmus (A3), des geschützten Schlüssels (Ki) und des Eingangssignals (RAND) eine Antwort (SRES) berechnet.

13. Teilnehmerstation nach Anspruch 12, wobei die Teilnehmerstation so eingerichtet ist, daß sie:
- eine Zählerfunktion (7', 9') unterhält, um ein Protokoll der Anzahl (C) falscher Eingangsignale (RAND) zu führen, und
- als Reaktion auf eine Anzeige durch die Zählerfunktion (7' , 9') , daß die Anzahl (C) falscher Eingangsignale einem vorgegebenen Grenzwert (Cmax) entspricht, blockiert, so daß die Teilnehmerstation nicht mehr für die Erzeugung richtiger Antworten auf empfangene Eingangsignale eingerichtet ist.

14. Teilnehmerstation nach einem der Ansprüche 11 bis 13, wobei die Teilnehmerstation (MS, MS') eine Teilnehmerstation eines mobilen Kommunikationssystems, vorzugsweise eines GSM-Systems ist und der Speicher (9, 9') und/oder der Zähler (5, 8, 8') auf einer SIM-Karte angeordnet sind, die abnehmbar an der Teilnehmerstation angebracht wird.

15. Teilnehmerstation nach einem der Ansprüche 11 bis 14, wobei der Zähler (8, 8') so eingerichtet ist, daß er eine zufällige Antwort berechnet, welche die Teilnehmerstation (MS, MS') als Reaktion auf ein falsches Eingangssignal (RAND) übermittelt.

16. SIM-Karte (SIM) für eine Teilnehmerstation eines Telekommunikationssystems, wobei das Telekommunikationssystem Authentifikationsmittel (1, 3, 4, VLR) zur Authentifikation einer Teilnehmerstation aufweist, wobei die Authentifikationsmittel einen Zufallszahlengenerator (1), einen Zähler (3) und einen Speicher (4) mit einem darin gespeicherten teilnehmerstationsspezifischen geschützten Schlüssel (Ki) der mindestens einen Teilnehmerstation (MS, MS') aufweisen, wobei die Authentifikationsmittel so eingerichtet sind, daß sie ein Eingangssignal (RAND), das eine unter Verwendung des Zufallszahlengenerators generierte Zufallszahl (RND) enthält, und einen mit der Zufallszahl und einem ersten Authentifikationsalgorithmus berechneten Nachrichtenberechtigungscode (MAC) zu der Teilnehmerstation senden und auf der Basis des Eingangssignals (RAND), eines Authentifikationsalgorithmus (A3) und des teilnehmerstationsspezifischen geschützten Schlüssels (Ki) eine Antwort (SRES) berechnen, und
wobei die Authentifikation einer Teilnehmerstation (MS, MS') durchgeführt wird, indem eine von der Teilnehmerstation als Reaktion auf das Eingangssignal (RAND) empfangene Antwort (SRES) mit der durch die Authentifikationsmittel berechneten Antwort (SRES) verglichen wird, wobei die SIM-Karte aufweist:
einen Zähler (8, 8') und
einen Speicher (9, 9') mit einem darin gespeicherten geschützten Schlüssel (Ki), und
einen Eingang zum Empfang eines Eingangssignals (RAND),
wobei die SIM-Karte so eingerichtet ist, daß sie
- einen vorgegebenen, die Zufallszahl enthaltenden Teil (RND) des Eingangssignals (RAND) und einen Prüfalgorithmus (f) nutzt, um einen Nachrichtenberechtigungscode (MAC) zu berechnen und die Richtigkeit des empfangenen Eingangssignals (RAND) zu prüfen,
- als Reaktion darauf, daß der berechnete Nachrichtenberechtigungscode (MAC) einem den Nachrichtenberechtigungscode (MAC) enthaltenden restlichen Teil des Eingangssignals (RAND) nicht entspricht, erkennt, daß das Eingangssignal (RAND) falsch ist, und
- als Reaktion darauf, daß der berechnete Nachrichtenberechtigungscode (MAC) einem den Nachrichtenberechtigungscode (MAC) enthaltenden restlichen Teil des Eingangssignals entspricht, eine Antwort (SRES) auf der Basis des Authentifikationsalgorithmus (A3), des geschützten Schlüssels (Ki) und des Eingangssignals (RAND) berechnet.

17. SIM-Karte nach Anspruch 16, wobei die SIM-Karte so eingerichtet ist, daß sie:
- eine Zählerfunktion (7', 9') unterhält, um ein Protokoll der Anzahl (C) falscher Eingangsignale (RAND) zu führen, und
- als Reaktion auf eine Anzeige durch die Zählerfunktion (7', 9'), daß die Anzahl (C) falscher Eingangsignale (RAND) einem vorgegebenen Grenzwert (Cmax) entspricht, blockiert, so daß die SIM-Karte nicht mehr für die Erzeugung richtiger Antworten auf die empfangenen Eingangsignale eingerichtet ist.

18. SIM-Karte nach Anspruch 16 oder 17, wobei der Zähler (8, 8') so eingerichtet ist, daß er als Reaktion auf ein falsches Eingangssignal (RAND) eine zufällige Antwort berechnet.

## Revendications

1. Procédé pour identifier un message d'authentification généré par un intrus externe dans un système de télécommunication comportant :
au moins une station d'abonné (MS, MS') comportant un compteur (8, 8') et une mémoire (9, 9') ayant une clé secrète spécifique à la station d'abonné (Ki) mémorisée dans celle-ci, et
des moyens d'authentification (1, 3, 4, VLR) pour authentifier ladite station d'abonné, les moyens d'authentification comportant un générateur de nombre aléatoire (1), un compteur (3) et une mémoire (4) ayant la clé secrète spécifique à la station d'abonné (Ki) de ladite au moins une station d'abonné (MS, MS') mémorisée dans celle-ci, lesdits moyens d'authentification étant agencés pour transmettre à la au moins une station d'abonné une entrée (RAND) incluant un nombre aléatoire (RND), généré en utilisant ledit générateur de nombre aléatoire, et un code d'authentification de message (MAC), calculé avec ledit nombre aléatoire et un premier algorithme (g), et pour calculer une réponse (SRES) sur la base de ladite entrée (RAND), d'un algorithme d'authentification (A3) et de la clé secrète spécifique à la station d'abonné (Ki), et
dans lequel l'authentification d'une station d'abonné (MS, MS') est effectuée en comparant une réponse (SRES) reçue en provenance de la station d'abonné en réponse à l'entrée (RAND) à la réponse (SRES) calculée par les moyens d'authentification, le procédé comportant les étapes consistant à :
recevoir avec ladite au moins une station d'abonné (MS, MS') un message d'authentification comportant ladite entrée (RAND),
contrôler l'exactitude de l'entrée en calculant dans ladite au moins une station d'abonné (MS, MS') un code d'authentification de message en utilisant une partie prédéterminée incluant ledit nombre aléatoire (RND) de l'entrée (RAND) et un algorithme de contrôle (f), et
identifier l'entrée comme étant incorrecte et le message d'authentification comme étant généré par l'intrus externe si le code d'authentification de message calculé ne correspond pas à une partie restante incluant ledit code d'authentification de message (MAC) de l'entrée (RAND), et
calculer une réponse (SRES) sur la base dudit algorithme d'authentification (A3), de l'entrée (RAND) et de ladite clé secrète (Ki) mémorisée dans la mémoire (9, 9') de la station d'abonné (MS, MS') et acheminer ladite réponse (SRES) depuis au moins une station d'abonné (MS, MS') si le code d'authentification de message calculé correspond à ladite partie restante incluant ledit code d'authentification de message l'entrée (RAND).

2. Procédé selon la revendication 1, comportant les étapes consistant à : actualiser une fonction de compteur pour conserver un enregistrement du nombre d'entrées (RAND) qui sont incorrectes, et
effectuer un verrouillage de la fonction d'authentification du dispositif à authentifier de sorte que le dispositif à authentifier ne produise plus de réponses correctes (SRES) aux entrées (RAND) dans les messages d'authentification si la fonction de compteur indique que le nombre d'entrées correctes a atteint une valeur limite prédéterminée.

3. Procédé selon l'une quelconque des revendications 1 à 2, comportant la production et l'envoi d'une réponse aléatoire si l'entrée (RAND) est incorrecte.

4. Procédé selon la revendication 3, dans lequel ladite réponse aléatoire est un nombre aléatoire.

5. Procédé selon la revendication 3, dans lequel ladite réponse aléatoire est calculée en utilisant l'entrée (RAND) et un algorithme prédéterminé.

6. Système de télécommunication comportant :
des moyens d'authentification (1, 3, 4, VLR) pour authentifier une station d'abonné, les moyens comportant un générateur de nombre aléatoire (1), un compteur (3) et une mémoire (4) ayant une clé secrète spécifique à la station d'abonné (Ki) de ladite station d'abonné (MS, MS') mémorisée dans celle-ci, les moyens d'authentification étant conçus pour :
- calculer une entrée (RAND), en calculant un code d'authentification de message avec un nombre aléatoire (RND) provenant du générateur de nombre aléatoire (1) et un premier algorithme (g), et en incluant ledit nombre aléatoire et ledit code d'authentification de message dans ladite entrée (RAND),
- calculer une réponse (SRES) sur la base de ladite entrée (RAND), d'un algorithme d'authentification (A3) et de la clé secrète spécifique à la station d'abonné (Ki) mémorisée dans la mémoire (4) des moyens d'authentification,
- transmettre ladite entrée (RAND) à ladite station d'abonné (MS), et
- indiquer que la station d'abonné (MS, MS') a été authentifiée en réponse aux moyens d'authentification (VLR) recevant en provenance de la station d'abonné (MS, MS') une réponse (SRES) qui correspond à une réponse (SRES) calculée par les moyens d'authentification, et
au moins une station d'abonné (MS, MS') comportant un compteur (8, 8') et une mémoire (9, 9') ayant une clé secrète spécifique à la station d'abonné (MS, MS') (Ki) mémorisée dans celle-ci, la station d'abonné (MS, MS') étant conçue pour :
- utiliser une partie prédéterminée incluant ledit nombre aléatoire (RND) de l'entrée (RAND) et un algorithme de contrôle pour calculer un code d'authentification de message (MAC) et pour contrôler l'exactitude d'une entrée reçue (RAND),
- identifier que l'entrée (RAND) est incorrecte en réponse au code d'authentification de message calculé (MAC) ne correspondant pas à une partie restante incluant ledit code d'authentification de message (MAC) de l'entrée (RAND), et
- calculer une réponse à transmettre aux moyens d'authentification (VLR) par la station d'abonné (MS, MS') sur la base dudit algorithme d'authentification (A3), de ladite clé secrète (Ki) mémorisée dans la mémoire (9, 9') de la station d'abonné (MS, MS') et de l'entrée (RAND) en réponse au code d'authentification de message calculé (MAC) correspondant à ladite partie restante incluant ledit code d'authentification de message (MAC) de l'entrée (RAND).

7. Système selon la revendication 6, dans lequel la station d'abonné (MS, MS') est conçue pour :
- actualiser une fonction de compteur (7', 9') pour conserver un enregistrement du nombre (C) d'entrées (RAND) qui sont incorrectes, et
- effectuer un verrouillage, de sorte que la station d'abonné n'est plus conçue pour produire des réponses correctes aux entrées reçues, en réponse à une indication par la fonction de compteur (7', 9') spécifiant que le nombre (C) d'entrées incorrectes correspond à une valeur limite prédéterminée (Cmax).

8. Système selon la revendication 6 ou 7, dans lequel la station d'abonné (MS, MS') est conçue pour calculer une réponse aléatoire à transmettre aux moyens d'authentification (VLR) par la station d'abonné (MS, MS') en réponse à une entrée incorrecte.

9. Système selon la revendication 6 ou 7, dans lequel la station d'abonné (MS, MS') est conçue pour ne transmettre aucune réponse aux moyens d'authentification en réponse à une entrée incorrecte (RAND).

10. Système selon l'une quelconque des revendications 6 à 9, dans lequel ledit système est un système de communication mobile, de manière préférée un système GSM.

11. Centre d'authentification (AC) d'un système de télécommunication, ledit système de télécommunication comportant au moins une station d'abonné (MS, MS') comportant un compteur (8, 8') et une mémoire (9, 9') ayant une clé secrète spécifique à la station d'abonné (Ki) mémorisée dans celle-ci, et dans lequel l'authentification d'une station d'abonné (MS, MS') est exécutée en transmettant une entrée (RAND) à ladite station d'abonné et en comparant une réponse (SRES) reçue en provenance de la station d'abonné en réponse à l'entrée (RAND) à une réponse (SRES) calculée par le centre d'authentification (AC), le centre d'authentification comportant :
un générateur de nombre aléatoire (1),
un compteur (3), et
une mémoire (4) ayant des clés secrètes spécifiques à la station d'abonné des stations d'abonné mémorisées celle-ci,
ledit centre d'authentification est conçu pour :
- produire une entrée (RAND), en calculant un code d'authentification de message avec un nombre aléatoire (RND) provenant du générateur de nombre aléatoire (1) et un premier algorithme (g), et en incluant ledit nombre aléatoire et ledit code d'authentification de message dans ladite entrée (RAND), et
- calculer une réponse (SRES) sur la base d'une clé secrète (Ki) récupérée à partir de la mémoire (4), de ladite entrée (RAND) et d'un algorithme d'authentification (A3), et
- transmettre l'entrée (RAND) et la réponse (SRES) à un élément de réseau exécutant l'authentification de la station d'abonné (MS, MS').

12. Station d'abonné (MS , MS') d'un système de télécommunication, ledit système de télécommunication comportant des moyens d'authentification (1, 3, 4, VLR) pour authentifier ladite station d'abonné, les moyens d'authentification comportant un générateur de nombre aléatoire (1), un compteur (3) et une mémoire (4) avec une clé secrète spécifique à la station d'abonné (Ki) de ladite au moins une station d'abonné (MS, MS'), mémorisée dans celle-ci, lesdits moyens d'authentification étant conçus pour transmettre à la station d'abonné une entrée (RAND) incluant un nombre aléatoire (RND), généré en utilisant ledit générateur de nombre aléatoire, et un code d'authentification de message (MAC), calculé à l'aide dudit nombre aléatoire et d'un premier algorithme, et pour calculer une réponse (SRES) sur la base de ladite entrée (RAND), d'un algorithme d'authentification (A3) et de la clé secrète spécifique à la station d'abonné (Ki), et
dans laquelle l'authentification d'une station d'abonné (MS, MS') est exécutée en comparant une réponse (SRES) reçue en provenance de la station d'abonné en réponse à l'entrée (RAND) à la réponse (SRES) calculée par les moyens d'authentification, la station d'abonné comportant :
une mémoire (9, 9') ayant une clé secrète (Ki) mémorisée dans celle-ci,
des moyens pour recevoir une entrée (RAND), et
un compteur (5, 8, 8'), et
la station d'abonné est conçue pour utiliser une partie prédéterminée incluant ledit nombre aléatoire (RND) de l'entrée (RAND) et un algorithme de contrôle (f) pour calculer un code d'authentification de message (MAC) et pour contrôler l'exactitude d'une entrée, et pour identifier que l'entrée (RAND) est incorrecte en réponse au code d'authentification de message calculé (MAC) ne correspondant pas à une partie restante incluant ledit code d'authentification de message (MAC) de l'entrée (RAND) et,
le compteur (8, 8') est conçu pour calculer une réponse (SRES) sur la base dudit algorithme d'authentification (A3), de ladite clé secrète (Ki) et de ladite entrée (RAND) en réponse au code d'authentification de message calculé (MAC) correspondant à une partie restante incluant ledit code d'authentification de message (MAC) de l'entrée.

13. Station d'abonné selon la revendication 12, dans laquelle ladite station d'abonné est conçue pour :
- actualiser une fonction de compteur (7', 9') pour conserver un enregistrement du nombre (C) d'entrées (RAND) qui sont incorrectes, et
- effectuer un verrouillage de sorte que la station d'abonné ne soit plus prévue pour produire des réponses correctes aux entrées reçues en réponse à une indication par la fonction de compteur (7', 9') spécifiant que le nombre (C) d'entrées incorrectes correspond à une valeur limite prédéterminée (Cmax).

14. Station d'abonné selon l'une quelconque des revendications 11 à 13, dans laquelle ladite station d'abonné (MS, MS') est une station d'abonné d'un système de communication mobile, de manière préférée un système GMS, et la mémoire (9, 9') et/ou le compteur (5, 8, 8') sont agencés sur une carte SIM fixée de manière amovible à la station d'abonné.

15. Station d'abonné selon l'une quelconque des revendications 11 à 14, dans laquelle le compteur (8, 8') est conçu pour calculer une réponse aléatoire que la station d'abonné (MS, MS') est conçue pour envoyer en tant que réponse à une entrée incorrecte (RAND).

16. Carte SIM (SIM) pour une station d'abonné d'un système de télécommunication, ledit système de télécommunication comportant des moyens d'authentification (1, 3, 4, VLR) pour authentifier une station d'abonné, les moyens d'authentification comportant un générateur de nombre aléatoire (1), un compteur (3) et une mémoire (4) ayant une clé secrète spécifique à la station d'abonné (Ki) de ladite au moins une station d'abonné (MS, MS') mémorisée dans celle-ci, lesdites moyens d'authentification étant conçus pour transmettre à la station d'abonné une entrée (RAND) incluant un nombre aléatoire (RND), généré en utilisant ledit générateur de nombre aléatoire, et un code d'authentification de message (MAC), calculé à l'aide dudit nombre aléatoire et d'un premier algorithme, et pour calculer une réponse (SRES) sur la base de ladite entrée (RAND), d'un algorithme d'authentification (A3) et de la clé secrète spécifique à la station d'abonné (Ki), et
dans laquelle l'authentification d'une station d'abonné (MS, MS') est exécutée en comparant une réponse (SRES) reçue en provenance de la station d'abonné en réponse à l'entrée (RAND) à la réponse (SRES) calculée par les moyens d'authentification, ladite carte SIM comportant :
un compteur (8, 8'), et
une mémoire (9, 9') ayant une clé secrète (Ki) mémorisée dans celle-ci, et
une embase d'entrée pour recevoir une entrée (RAND),
la carte SIM est conçue pour :
- utiliser une partie prédéterminée incluant ledit nombre aléatoire (RND) de l'entrée (RAND) et un algorithme de contrôle (f) pour calculer un code d'authentification de message (MAC) et pour contrôler l'exactitude de l'entrée reçue (RAND),
- identifier que l'entrée (RAND) est incorrecte en réponse au code d'authentification de message calculé (MAC) ne correspondant pas à une partie restante incluant ledit code d'authentification de message (MAC) de l'entrée (RAND), et
- calculer une réponse (SRES) sur la base dudit algorithme d'authentification (A3), de ladite clé secrète (Ki) et de ladite entrée (RAND) en réponse au code d'authentification de message calculé (MAC) correspondant à une partie restante incluant ledit code d'authentification de message (MAC) de l'entrée.

17. Carte SIM selon la revendication 16, dans laquelle la carte SIM est conçue pour :
- actualiser une fonction de compteur (7', 9') pour conserver un enregistrement du nombre (C) d'entrées (RAND) qui sont incorrectes, et
- effectuer un verrouillage de sorte que la carte SIM n'est plus agencée pour produire des réponses correctes aux entrées reçues en réponse à une indication par la fonction de compteur (7', 9') spécifiant que le nombre (C) d'entrées incorrectes correspond à une valeur limite prédéterminée (Cmax).

18. Carte SIM selon l'une quelconque des revendications 16 ou 17, dans laquelle le compteur (8, 8') est conçu pour calculer une réponse aléatoire en réponse à une entrée incorrecte (RAND).
